# EUROPEAN PATENT SPECIFICATION

(11) **EP 2 215 770 B1**
(45) Date of publication and mention of the grant of the patent: **20.03.2013**
(21) Application number: 07821543.1
(22) Date of filing: 18.10.2007
(51) Int. Cl.: H04L 12/46, H04L 29/08

(54) **Merging of overlay networks in distributed data structures**
Zusammenlegen von Overlay-Netzwerken in verteilten Datenstrukturen
Fusion de réseaux dédiés dans des structures de données distribuées

(43) Date of publication of application: 11.08.2010
(73) Proprietor: Telefonaktiebolaget L M Ericsson (publ), 164 83 Stockholm (SE)
(72) Inventor: KIS, Zoltán Lajos, H-1033 Budapest (HU)
(74) Representative: Mohsler, Gabriele
(86) International application number: PCT/EP2007/061179
(87) International publication number: WO 2009/049680

(56) References cited:
- EP-A- 1 398 924
- GANESAN P ET AL: "Canon in G major:designing DHTs with hierarchical structure" DISTRIBUTED COMPUTING SYSTEMS, 2004. PROCEEDINGS. 24TH INTERNATIONAL CONFERENCE ON HACHIOJI, TOKYO, JAPAN 24-26 MARCH 2004, PISCATAWAY, NJ, USA,IEEE, 24 March 2004 (2004-03-24), pages 263-272, XP010692673 ISBN: 0-7695-2086-3
- SHAFAAT T, GHODSI A, HARIDI S.: "Handling Netork Partitions and Mergers in Structured Overlay Networks" SEVENTH IEEE INTERNATIONAL CONFERENCE ON PEER-TO-PEER COMPUTING, 5 September 2007 (2007-09-05), pages 132-139, XP002470877 http://ieeexplore.ieee.org/xpls/abs_all.js p?arnumber=4343473
- ANWITAMAN DATTA ET AL: "The Challenges of Merging Two Similar Structured Overlays: A Tale of Two Networks" SELF-ORGANIZING SYSTEMS LECTURE NOTES IN COMPUTER SCIENCE;;LNCS, SPRINGER BERLIN HEIDELBERG, BE, vol. 4124, 2006, pages 7-22, XP019042040 Springer-Verlag Berlin ISBN: 978-3-540-37658-3
- YUNFEI ZHANG ET AL: "On the union of chord-like networks" SERVICES COMPUTING, 2004. (SCC 2004). PROCEEDINGS. 2004 IEEE INTERNATIONAL CONFERENCE ON SHANGHAI, CHINA SEPT. 15-18, 2004, PISCATAWAY, NJ, USA,IEEE, 15 September 2004 (2004-09-15), pages 536-540, XP010741577 ISBN: 0-7695-2225-4

## Description

### Technical field

The present invention relates to methods and apparatus for merging of overlay networks in distributed data structures.

### Background

Distributed computing requires constant interaction between all collaborating network nodes within a distributed data structure. It is impossible to provide such constant interaction between network nodes using a traditional client-server based approach as such a server would form both a bottleneck and a single point of failure. For this reason a so-called peer-to-peer (P2P) network has been proposed in which all network nodes take an equal role. In a P2P network all network nodes are equal in the sense that they incorporate both client and server functionalities and each node makes requests directly to other nodes within the network.

In a collaborative network environment a common data repository is required, and this data repository can also be implemented by P2P means. Distributed hash tables (DHTs) are used for this data repository utilising a hash function to map data keys onto coordinate spaces and to distribute coordinate spaces among the participating nodes. A routing algorithm is responsible for finding the node responsible for a given segment of space and thus finding a queried key. Some applications use so-called consistent hashing in which the same hash function is used to map keys and node identifiers to the same coordinate space, and a distance metric is used to map space partitions to nodes. In such applications participating nodes are identified by unique identifiers, but are addressed by means of their network addresses. Therefore each node in the network requires a triplet of data (unique identifier, IP address, port number) in order to be able to communicate with other participating nodes.

One such DHT implemented data structure is the so-called Chord ring structure, as disclosed by 1. Stoica, R. Morris, D. Karger, F. Kaashoek and H. Balakrishnan, "Chord: A scalable peer-to-peer lookup service for internet applications", Proceedings of SIGCOMM'01, 2001. In such a Chord ring structure, the identifier space used is a circle, the highest and lowest identifiers represent neighbouring nodes, and the identifiers are organized in clockwise order from lowest to highest.

Furthermore, in such a Chord ring structure, the two direct neighbours of a particular node are denoted the predecessor and successor of that node, the former being the counter-clockwise neighbour, and the latter being the clockwise neighbor, i.e., for all nodes except the node with the lowest identifier, the predecessor of the node is the node with the highest identifier amongst the nodes having lower identifiers than the node in question, whereas, for the node with the lowest identifier, the predecessor of the node is the node with the highest identifier amongst all the nodes. The successor of the node in question is determined similarly but with the ordering of the nodes in the opposite direction.

Additionally, in such a Chord ring structure, every node participating in the network becomes responsible for the identifier space interval between its own identifier (inclusive) and the identifier of its predecessor (exclusive). All node insertions and requests for items of data with keys in this interval are to be forwarded to the address of this specific node.

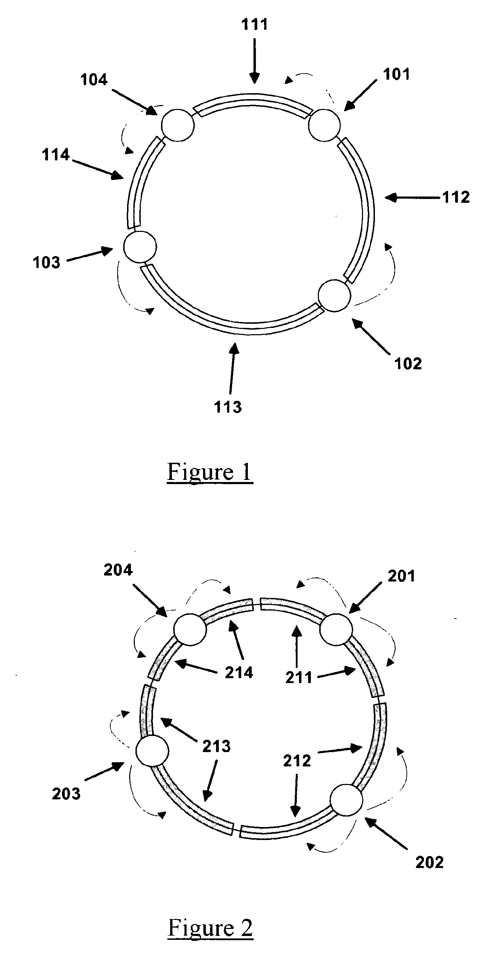

Figure 1 is a diagram illustrating an example of a Chord ring. The nodes 101, 102, 103 and 104 are represented by white circles in the diagram and are aligned in the same identifier space as the data keys. Furthermore the data key space partitions are represented by shaded segments 111, 112, 113 and 114 and the arrows show which node is responsible for which segment, for example node 101 being responsible for segment 111.

Each node incorporates references to its successor and its predecessor to enable the forwarding of insertions and queries along the Chord ring structure. To achieve scalable performance, the nodes of the ring structure also maintain some long-range connections (neighbour references are taken as short-range ones) called finger pointers. Typically a node has finger pointers to the successors of identifiers that are 2¹ away from the identifier of the node. It is important to note that the use of finger pointers is not necessary for correct operation of the routing protocol, and is only required to ensure scalability of the lookup.

To ensure that the ring structure is not disconnected during a node failure, the nodes also maintain a list of some of their successors, so that, if a few successors are lost, the nodes can reconnect with a subsequent node that is still available. In general the collection of pointers to direct neighbors of a node (to some of its successors and predecessors in the case of a Chord ring) is called a node's leaf set. The Chord protocol also incorporates certain maintenance protocols that are run in the background to ensure that both the finger pointer tables and the successor lists are up to date at all times. The details of these features are however not important in the context of present discussion.

Communication in such a Chord ring is unidirectional in the sense of all communications traverse nodes, in the same direction as the address space increases. In a modified version of Chord ring, called a bidirectional Chord ring, communication can occur in both directions. This modified structure requires the identifier space to be distributed in a different manner among the nodes. In a bidirectional Chord ring structure each node is responsible for all identifiers that the node is closest to in the identifier space (the question as to which of two nodes is responsible for an identifier that is equally distant therefrom being determined according to implementation details), as shown in Figure 2, where nodes 201, 202, 203 and 204 are responsible for segments 211, 212, 213 and 214 respectively. This modified version has many benefits in terms of the scalability of the ring structure for the cost of increased maintenance overhead. However the basic principles of the ring structure are unchanged in the modified version in that the nodes still only need to incorporate references to their direct neighbours for correct routing, as well as references to some other neighbouring nodes to maintain robustness.

DHT implemented ring structures, and specifically Chord ring structures, are intended to provide a global overlay network. However, the Ambient Network EU project has identified network compositions that are likely to be important in the control of future networking systems. In particular, if two such networks have their own data repository overlays, these data repository overlays also need to be merged.

As the merging of two Chord ring structures basically involves the total repartitioning of the segments of the identifier space of each ring structure (because each node will then become responsible for a different segment to that for which it was responsible before the merger), such a merge process requires a high number of predecessor and successor changes and data relocations from each of the participatting nodes. Furthermore this repartitioning should be done by a central control entity that is not available in a distributed environment.

The current Chord protocol is not well adapted to such a merge process as it is only really suitable for the joining together and/or severing of individual nodes. Therefore the only existing solution given by the Chord protocol itself for such a merge process is the trivial one of making all participating nodes leave one ring and join the other ring one by one. Such a merge process creates high network traffic most of which should be avoidable if a suitable merge protocol is used. Another problem presented by such a merge process is that it renders one of the rings (that is the ring that the nodes leave) useless during the merge process, as the ring incrementally loses its information as the nodes leave and join the other ring. It would also be possible for the nodes to leave their items of data behind when leaving a ring in such a merge process, thus maintaining use of both rings during the merger. However this results in the last node to leave the ring becoming a single point of failure. Also carrying out the merger this way generates a very high number of data transfers (because each node leaving the ring relocates its data to its successor, and the last node distributes all the data of the ring within the other ring).

Another limitation of the current Chord ring is that, because it aims at creating a global, unique overlay, there is no means available for detecting the presence of another Chord ring. To facilitate such a detection, an overlay identifier needs to be incorporated, where a unique identifier is used for identifying each individual ring.

The paper, "The challenges of merging two similar structured overlays: A tale of two networks", International Workshop on Self-Organizing Systems (IWSOS), Anwitaman Datta and Karl Aberer, University of Passau, Germany, September 18 - 20, 2006, presents an alternative Chord protocol based solution by which two Chord ring structures are merged into one using the maintenance methods of the rings only. However, as the paper itself concludes, this solution is not feasible in practice.

The paper, "Canon in G major: designing DHTs with hierarchical structure", Prasanna Ganesan, Krishna Gummadi and Hector Garcia-Molina, Stanford University, CA, USA, Distributed Computing Systems, 2004 Proceedings 24th International, describes a protocol, called Crescendo, to merge two Chord ring structures. However this protocol assumes global knowledge for the merger that is not realisable in real life distributed networks, so that the protocol is only feasible in theory and not in practice.

The paper, "Efficient Recovery From Organizational Disconnects in SkipNet", Nicholas J. A. Harvey, Michael B. Jones, Marvin Theimer and Alec Wolman, Second International Workshop on Peer-to-Peer Systems (IPTPS '03), February 2003, and EP 1398924A2 describe a protocol for the merging of ring structures that could be used for the merging of Chord ring structures without modification. The only drawback is that SkipNet protocol assumes that it is possible to preassign node identifiers so as to ensure that each network has a unique identifier prefix. This ensures that the nodes of each ring will comprise a continuous segment in the merged ring, so that the merger requires actions from the first and last nodes of each ring only (constantly two nodes only per segment, regardless of the arrangement). This might be feasible in company-wide networks, but is not realisable in mobile or dynamic networks.

### Summary

It is an object of the invention to provide a technique for merging overlay networks in distributed data structures in a manner which enables it to be used in a wide range of applications.

According to a first aspect of the present invention there is provided a process for merging of overlay networks in a distributed data structure, each overlay network comprising a multiplicity of nodes spaced around a ring each of which has a unique identifier and a leaf set identifying its neighbouring nodes, the process comprising the following steps performed in sequence around the rings:
(a) establishing a communication link between a node in one of the rings and a node in the other ring and determining which of the nodes is to serve as an initiator node for initiating the merge process, the initiator node being preceded in its ring by its predecessor node and being followed in its ring by its successor node as identified by its leaf set;
(b) determining which of the nodes in the ring that does not include the initiator node constitutes the alternative successor of the initiator node and which of said successor node and said alternative successor node is to serve as a destination node according to which is closer to the initiator node;
(c) following step (b), causing the initiator node to make a data relocation request to the destination node, where data relocation enables a routing algorithm of the merged ring structure to find all the data in its correct place;
(d) performing data relocation from the destination node to the initiator node in response to said data relocation request, and transmitting a token from the initiator node to the destination node that includes the identifier and leaf set of the initiator node;
(e) repeating steps (b) to (d) for the destination node to determine which of the successor node and the alternative successor node of the destination node is to serve as a further destination node and to effect data relocation from the further destination node to the destination node; and
(f) repeating steps (b) to (d) for the remaining nodes until all the nodes have been merged together and the merge process is stopped by receipt of a token by the initiator node.

An advantage of this technique is that it only generates the necessary number of data relocations and leaf set updates required by the constraints of the overlay construction algorithm, by contrast to the previously proposed solutions for the problem. Furthermore multiple merger processes can preferably be run in parallel, making it theoretically possible to merge two rings with logarithmic time complexity at the price of only a minimal increase in message complexity.

By aligning the two rings to be merged with respect to one another (i.e. by finding the alternative successor of the initiator node), it is possible to create a situation in which it is possible for nodes to properly merge the two rings using only their local knowledge base. Furthermore the algorithm can effect the merger without using any unneccessary messages (excluding control messages) or data relocations, and is thus optimally efficient.

The invention also provides a node for use an overlay network and adapted to enable merging of two such overlay networks in a distributed data structure, the overlay network comprising a multiplicity of nodes spaced around a ring, and each of the nodes having a unique identifier and a leaf set identifying its neighbouring nodes, and being preceded in its ring by its predecessor node and being followed in its ring by its successor node as identified by its leaf set, said node comprising:
(a) link means for establishing a communication link between said node and a node of the other overlay network;
(b) first determination means for determining which of the nodes in the other overlay network constitutes (i) the alternative predecessor node of said node and (ii) the alternative successor of said node;
(c) second determination means for determining which of said successor node and said alternative successor node is to serve as a destination node according to which is closer to said node;
(d) request means for causing said node to make a data relocation request to the destination node to initiate data relocation from the destination node to said node, where data relocation enables a routing algorithm of the merged ring structure to find all the data in its correct place;
(f) transmitting means for transmitting a token from said node to the destination node that includes the identifier and leaf set of said node; and
(h) receiving means for receiving a token from another node that includes the identifier and leaf set of said other node.

### Brief description of the drawings

Figure 1 is a diagram of a unidirectional Chord ring structure;
Figure 2 is a diagram of a bidirectional Chord ring structure;
Figure 3 is a diagram illustrating the information required by node n to execute the local changes during the merger;
Figure 4 is a diagram illustrating the sequential steps in a process for merging two such structures together in accordance with a preferred embodiment of the invention;
Figures 5 to 8 are diagrams illustrating data movements in all possible scenarios in the vicinity of node n during the process for merging two unidirectional Chord ring structures together in accordance with a preferred embodiment of the invention;
Figures 9 to 16 are diagrams illustrating data movements in all possible scenarios initiated by node n during the process for merging two bidirectional Chord ring structures together in accordance with a further embodiment of the invention;
Figure 17 shows pseudo code for utility functions used in later pseudo codes;
Figure 18 shows pseudo code for the initiation of a merger for both unidirectional and bidirectional Chord rings;
Figure 19 shows pseudo code for sending responses to requests for both the unidirectional and bidirectional merger processes;
Figure 20 shows pseudo code for the preferred merger algorithm for the unidirectional Chord ring structure in accordance with a preferred embodiment of the invention; and
Figures 21 and 22 show pseudo code for the preferred merger algorithm for the bidirectional Chord ring structure in accordance with a further embodiment of the invention.

### Detailed description

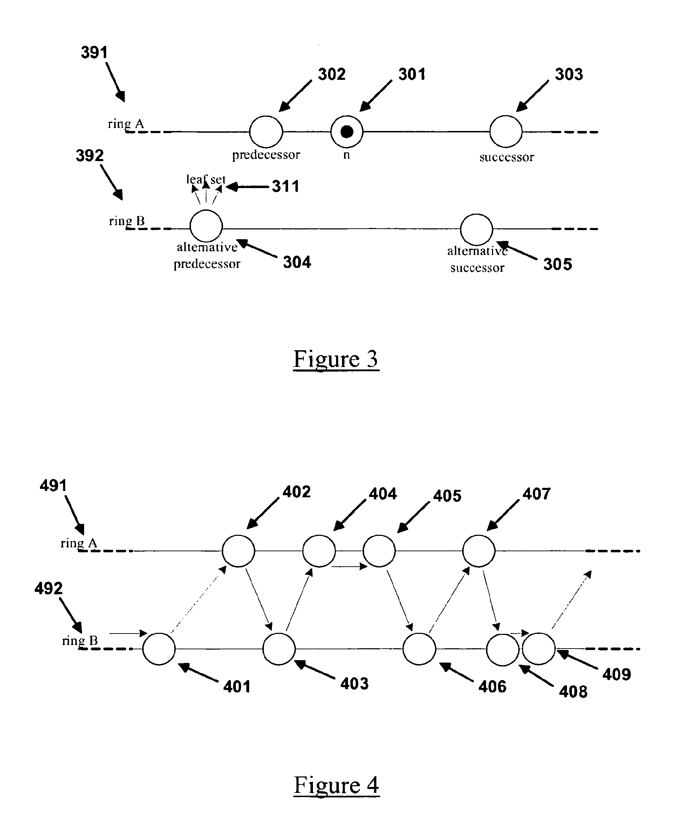

The following is a description, with reference to Figures 3 and 4, of the basic principles used in a preferred merger protocol in accordance with the invention for merging two Chord ring structures exploiting the topology information of both Chord ring structures. In this protocol the participating nodes of both ring structures execute decisions based on local knowledge and well defined (constantly sized regardless of network size) additional information only. The combined effect of these local decisions is to enable the merger of the two Chord ring structures.

The required additional information for each node 301 (having a predecessor 302 and a successor 303 in the same ring 391) in the merger algorithm is (i) the identifiers of its predecessor 304 and successor 305 in the other ring 392 (referred to as alternative predecessor and alternative successor respectively) and (ii) the leaf set 311 of that predecessor. The predecessor and the successor nodes of the node 301 in question (marked with a black dot) along the ring structure A are shown diagrammatically in Figure 3, together with the alternative predecessor and alternative successor in the adjacent ring structure B and the leaf set of the alternative predecessor. The figure represents the same identifier space sections of the two ring structures A and B to be merged as linear.

In order to ensure these additional items of information are received by all nodes of both ring structures in the merge protocol, the algorithm virtually places the identifier spaces of the two ring structures to be merged in parallel and 'zips' them together by successively actuating the nodes of the two ring structures 491 and 492 in a clockwise order as shown diagrammatically in Figure 4 passing through nodes 401 to 409. The merge process involves actuation of the nodes one-by-one, and each node takes actions based on the information available to it before passing necessary information to the next node.

Such a merge process is characterised in that each participating node can be responsible for starting the merge process if required, and can become the initiator node. Furthermore every node (of both rings) participates in the merge process with an equal role, and each node acts only based on its local knowledge (including the information received from the previous node). This limited knowledge has a fix length, and thus can be very well confined.

The zipping together of the two ring structures is done in a linear manner, starting and ending at the same node, so that the merger algorithm is completed in o(N) actuating steps, where N is the total number of nodes in the two ring structures. Furthermore, because of the linear manner of the merging process, multiple instances of the merge protocol can be run on the same merging ring structures in parallel in order to shorten the overall time period required for the whole of the merging process. In theory it is possible to run multiple instances of the merge protocol distributed along the identifier ring in such a way that the merging process is completed within a period of o(logN). However the running of multiple instances in this manner involves an increase in the overall management traffic required by the merging process. By selecting an appropriate strategy for running the multiple instances, it may be possible to provide an acceptable trade-off between increased management traffic and decreased completion time.

For the zipping together of the two ring structures to be achievable, each node needs to incorporate references to the adjacent nodes in both ring structures. Since each node will in any case incorporate a reference to its successor in the same ring structure, it follows that the main requirement will be to pass to each node the contact details of the next node in the other ring structure. This is done by passing to the node in question the leaf set of the alternative predecessor, that is the immediately preceding node in the other ring structure (which will include a reference to the the contact details of the next node in the other ring structure).

During the merge process the nodes will change their overlay identifier that identifies the ring structure to which they belong. A new identifier is transmitted between the nodes as the zipping proceeds, and the completion of the merge process can be detected when a node receives a message during the merge process that contains the node's own overlay identifier. In this case the node detects the completion of the merge process and notifies such completion to higher layer modules. Where multiple instances of the merge protocol are run, multiple nodes will detect the completion of the merge process. In this case it will be the responsibility of higher layer modules to detect the completion of the overall merge process (e.g. by waiting for completion of the merger from the initiator node).

In order to allow the ring structures to work during the merge process, the nodes need to have soft state storage, that is basically a data storage system having a timestamp associated with each item of data stored so that, whenever an item of data becomes older then a predefined threshold, the item of data is discarded. Use of such a storage system ensures that a network node can eventually become part of a new merged ring structure while remaining part of the old ring structure for a limited time until the threshold time period has elapsed and the node is caused to automatically leave the old ring structure and become part of the new ring structure without further action being required. Similarly the items of data need to be stored in a soft state storage system, so that data previously required by the node, but that the node will not be responsible for in the merged ring structure, is only stored at the node for a limited time until a threshold time period has elapsed and the node is caused to discard the data. In this way a node can differentiate after a merging process between requests coming from the merged ring and requests coming from the original ring. Thus the node can use the appropriate leaf set (the one saved from before the merger, or the one created during the merger) from its soft-state storage.

The merge process basically consists of three distinct process steps once the initiation step has finished. In the first step the leaf set of the node is updated with the contact details of the neighbouring nodes in the other ring structure (after temporarily saving its original leaf set for later reuse). This can be done by merging the leaf set of the alternative successor with the node's own leaf set for both ring structures. This ensures connectivity in the merged ring structure. In the second step the acting node requests data relocations from locally known nodes to allow the routing algorithm of the merged ring structure to find all the data in its correct place. This will be described in the next paragraph in detail. In the final step a new token of the same format is produced and sent to the next node in the sequence. If the token is to be sent to the successor of the node, the alternative leaf set, the alternative predecessor and the alternative successor fields remain the same as in the token received by the node. On the other hand, if the token is to be sent to the alternative successor, the leaf set of the node and the predecessor and successor pointers will be placed in these fields along with the new overlay identifier.

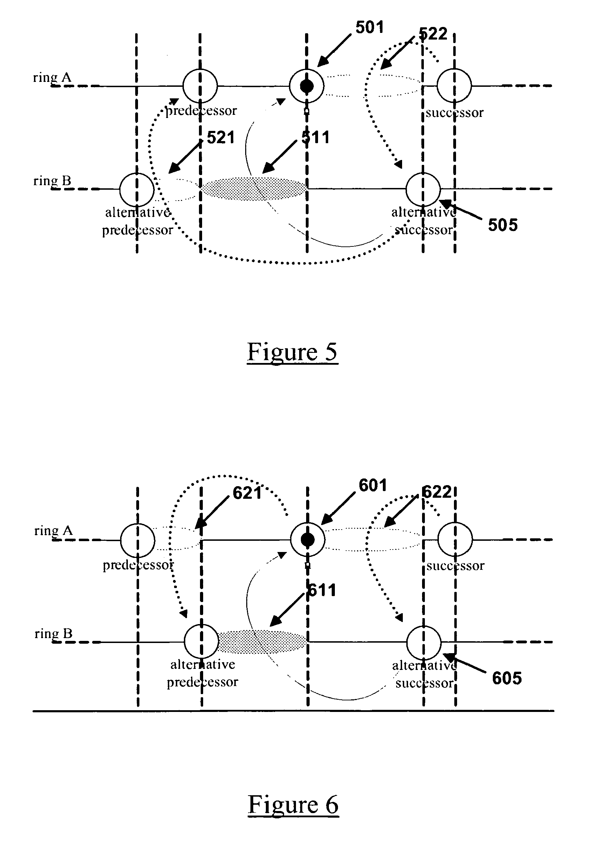

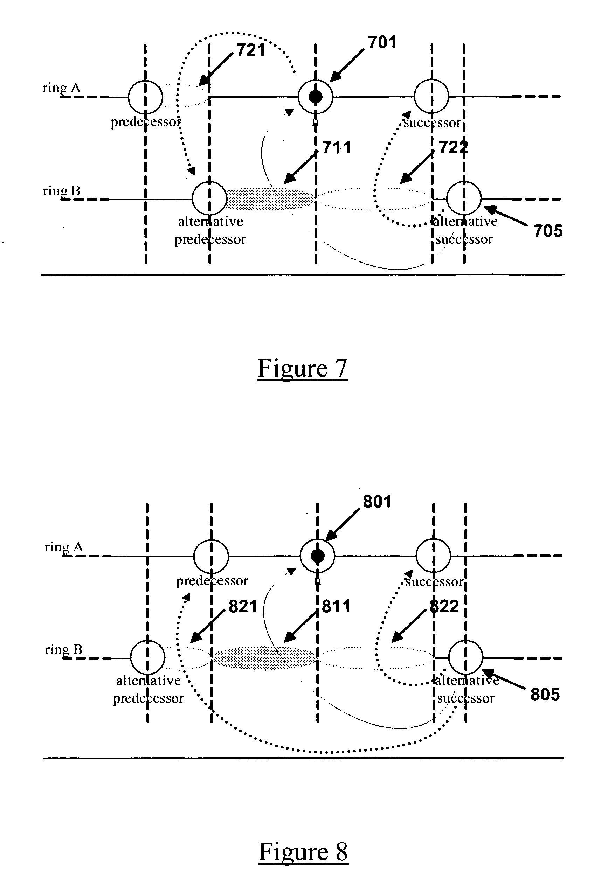

Because the neighbour relationships between the nodes are changed during the merge process, the responsibilities of the nodes for segments of data are also changed. In the original Chord ring structure, the alternative successor 505, 605, 705 and 805 will initially be responsible for a part of the segment of data 511, 611, 711 and 811 that the current node 501, 601, 701 and 801 will be responsible for after the merger, as shown by the shaded section denoting a segment of data to be transferred to the node in question in the diagrams of Figure 5 to 8, and arrows representing the source and destination of the relocations.

Therefore, during the zipping process, every node sends a data request to its alternative successor to effect transfer of data within the segment between the predecessor or the alternative predecessor (whichever is closer to the node) and the node itself. In order to assist understanding of the overall data relocations taking place, the data movements in the vicinity of the node n 521, 522, 621, 622, 721, 722, 821 and 822 are also shown by dashed segments in the diagrams of Figures 5 to 8.

Data requests are made asynchronously in relation to the zipping process in that a request for transfer of data is sent, but the response to the data transfer request is not awaited before the token is passed to the next node. Instead the response to the data transfer request is made later. An advantage of such an asynchronous process is that, in event that a packet is lost, a further request for transfer of data can be issued after a given timeout, without blocking the merging process itself.

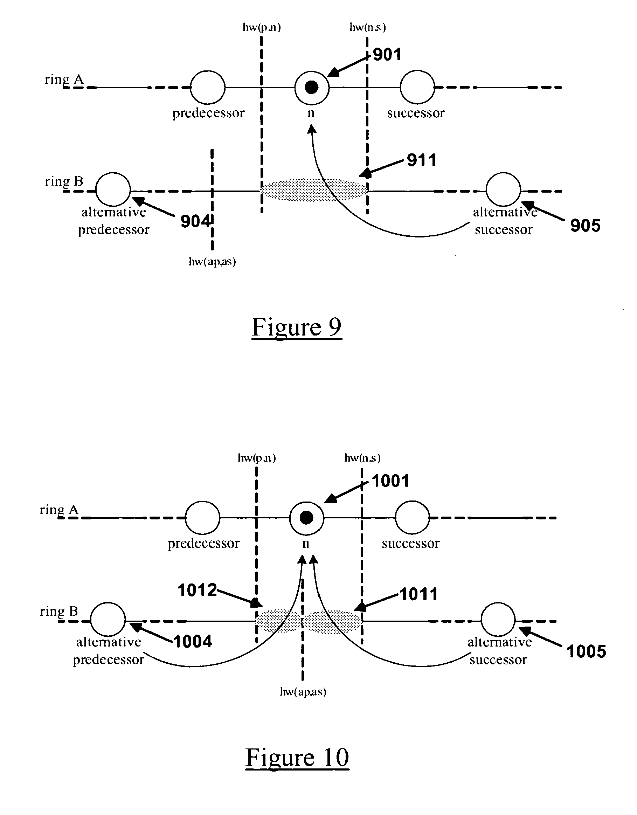

The case of a bidirectional Chord ring structure, as shown diagrammatically in Figure 9 to 16, is somewhat different because of the different distribution of associated data. The main difference is caused by the different positioning of the data, because in this case the acting node (node n) 901, 1001, 1101, 1201, 1301, 1401, 1501 and 1601 needs to request data relocation not only from its alternative successor 905, 1005, 1105, 1205, 1305, 1405, 1505 and 1605 (moving segments 911, 1011, 1211, 1311, 1511 and 1611), but also from its alternative predecessor 904, 1004, 1104, 1204, 1304, 1404, 1504 and 1604 (moving segments 1012, 1112, 1312, 1412, 1512 and 1612). This can however be done with the same pieces of information as for the unidirectional Chord ring.

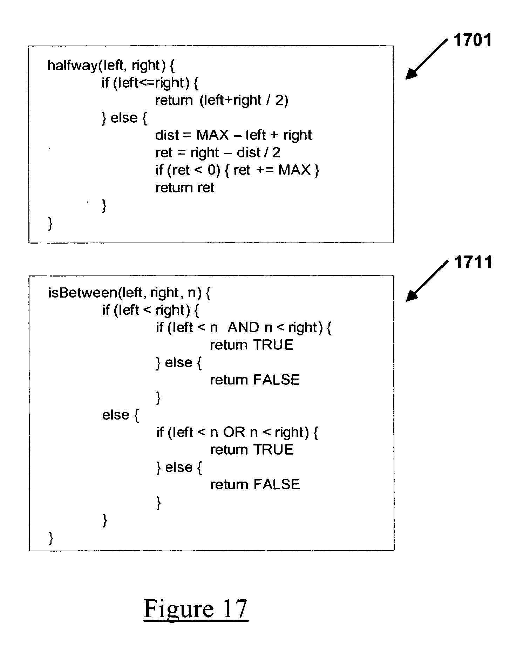

The basic principles of the preferred merger algorithms for merging two Chord ring structures in accordance with the invention have been described above, and the following section describes preferred implementations of the merger algorithms, with reference to Figures 17 to 22, including the necessary message types and the flow of events utilising pseudo code listings of the algorithms.

The merger of two ring structures is triggered when the ring structures can access one another on the same network partition. This is detected by the nodes participating in the ring structures. To enable such detection, the ring structures need to have unique identifiers created by hash functions or other cryptographic means. Furthermore the nodes need to make use of a hello messaging mechanism that broadcasts the identifiers of the ring structures. When a hello message is received by a node of one ring structure from a node of another ring structure, the two nodes can negotiate a merger. Assuming that the negotiation succeeds and also assuming that the participating nodes both decide to merge with the other ring structure, the two participating nodes will select one of them to become the initiator of the merger.

This initial state of the merger algorithm is similar for both the original Chord ring structure and the bidirectional Chord ring structure. The initiator node initially needs to gather enough information from the other ring Chord ring structure in order to make its local decision. Subsequently this information will be passed to the next node, and so on, so that later nodes do not need to make the same communications that have already been initiated by the initiator node.

The initiator node first determines the successor of its identifier in the other ring structure (referred to as its alternative successor) by requesting this information from the contact node 1801 and 1901. This is done trivially in the original Chord ring structure, as the query process returns exactly the successor of an identifier. In the case of the bidirectional Chord ring structure, the query will be routed to the responsible node of the given identifier, which will be able to pass the successor of this identifier (either its own identifier, or that of its successor).

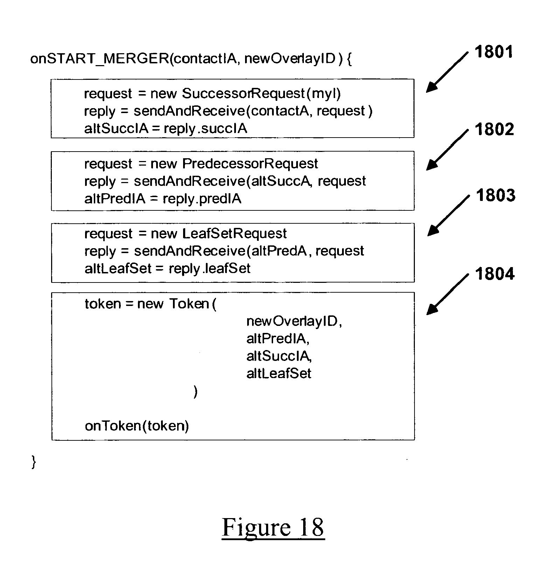

Once the alternative successor is known, the initiator node can request the predecessor 1802 and 1911 of the alternative successor directly (referred to as its alternative predecessor). Finally the alternative successor is queried for its leaf set 1803 and 1921. This start merger process is shown in Figure 18 with pseudo code listing. The trigger of the merger is denoted by a START_MERGER input containing the address of the contact node and the new overlay ID of the merger ring structure which should be received from higher level modules, such as the module that provides the decision to merge with the other ring structure in contact with the ring structure in question.

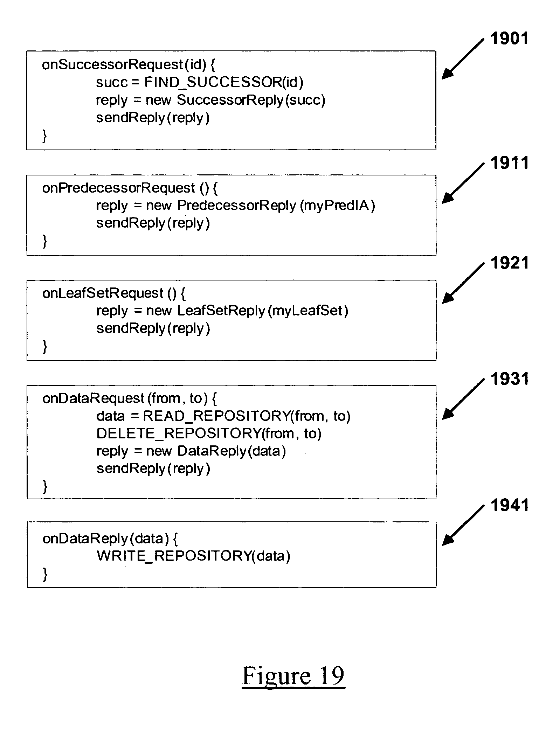

In the pseudo code listings the contact addresses are prefixed with 'A', while identifiers are prefixed with 'I'. When both types of contact information are sent, this is denoted by use of the prefix 'IA'. For completeness of description of the algorithm, the counterpart of the previous sequence is shown in Figure 19, this basically consisting of receipt of a request followed by sending of a reply. A reply to a SucccessorRequest message differs from the other replies in that it requires the replying node to use its own ring search facility to be able to answer.

The process steps described above require a module call incorporating six kinds of message, namely START_MERGER, SuccessorRequest, SuccessorReply, PredecessorRequest, PredecessorReply, LeafsetRequest and LeafsetReply, the fiunctions of which are described in more detail below.

When a node has all the necessary local information ready (either after initiating or after receiving a token) it makes data requests to other nodes (its alternative successor and/or its alternative predecessor). The destination node in reply sends back the requested interval 1931 that is added to the stored data of the initiator node 1941 as shown in Figure 19. The two types of message used are DataRequest(from, to) and DataReply(data) which are described in more detail below.

The data requests are handled asynchronously in relation to the zipping in that, immediately after sending the data request(s), each node sends a command accompanied by the necessary data to the next node on the identifier ring. The command and the accompanying data is termed a token.

The rest of the algorithm is described separately for the two Chord ring structure types as the algorithms for the two types differ in terms of the data requests from local nodes.

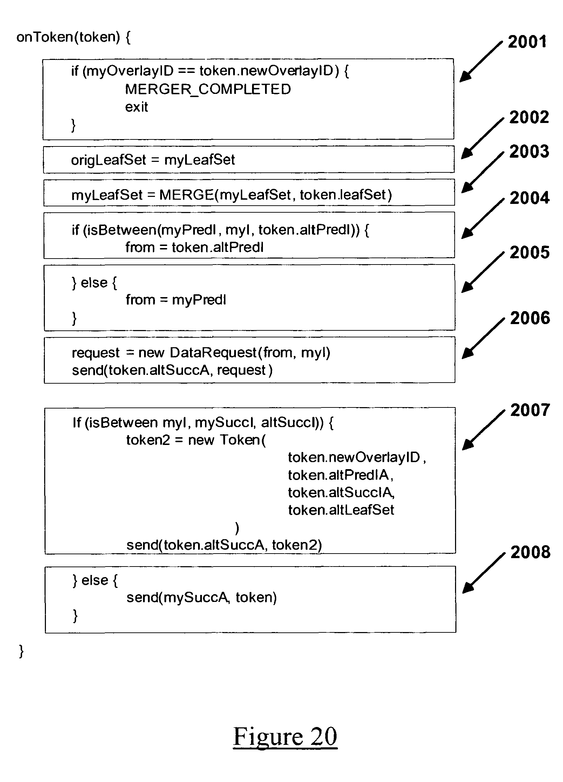

A pseudo code listing for the unidirectional Chord ring structure is shown in Figure 20. The prefix 'my' is used in this figure to denote the data of the actual node, e.g. *myI* denotes the identifier of the actual node, and *mySuccA* denotes the network address of the actual node of the successor. Finally, *altLeafset* denotes the leaf set of the alternative predecessor.

Two helper functions are also used, as shown in Figure 17. The halfway function 1701 returns the identifier that is halfway between two identifiers on the identifier ring. This is used for the bidirectional Chord ring only, for finding the edges of data segments of each individual node. The isBetween function 1711 checks whether the third input identifier falls into the identifier segment given by the first two identifier. This latter function is used for the ordering of identifiers on the Chord ring.

A node can be placed in the active state either in response to initiation of a merger (by means of the start merger process of Figure 18) or in response to receipt of a token at 1804. If a token is received, the overlay identifier of the token is compared with the current overlay identifier of the node at 2001. If the two identifiers match this means that the merger process has been completed, and the node finishes the algorithm and notifies the higher application layer that the merger process has been completed by means of a MERGER_COMPLETED call).

The first step of the currently active node is to store its current leaf set at 2002, because this exact leaf set must be put into the token in case the token is to be sent to the alternative successor of the node. After saving the current state of the leaf set, the node merges its own leaf set with the one received in the token at 2003. This process results in the active node having a leaf set that can be used in the merged ring.

The second step is to calculate the identifier space segment to be requested (as described above) at 2004 and 2005 and to send the request to the alternative successor. The sending of this message and its reply are effected asynchronously at 2006 as shown on Figure 20 (because the merger algorithms used for the two types of Chord ring structure use the same message type, the message sent also contains a data field which is always set to null.)

In the final step the receiver of the token is decided by whether the successor of the node in question in the same ring structure (at 2008) or the alternative successor in the other ring structure is closer (at 2007) to the node in question in a clockwise direction. If the true successor is closer to the node in question, the same token is forwarded to the true successor. Otherwise, if the alternative successor is closer to the node in question, a new token is produced with the data of the node in question and forwarded to the alternative successor.

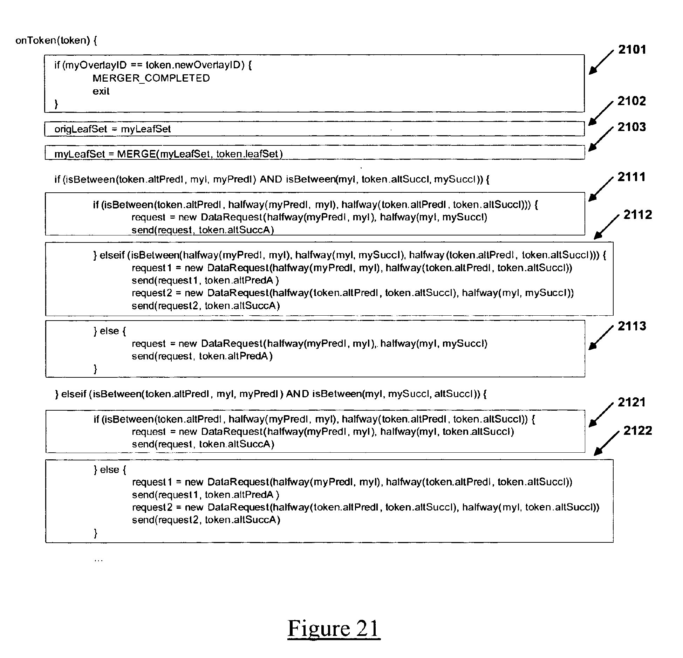

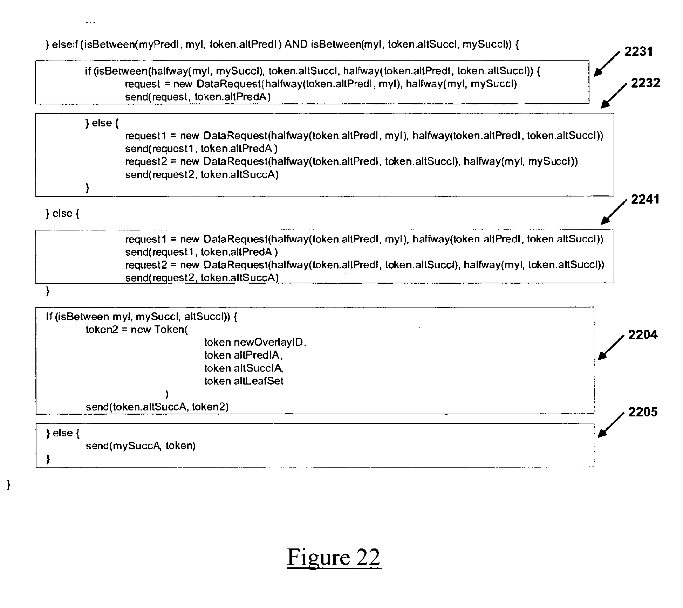

The same conventions are used for the description of the algorithm for the bidirectional Chord ring structure. Furthermore a new function is used for convenience, namely the hw (shortened form of halfway) function that returns the identifier that is halfway between the two identifier arguments. This function is used to decide the boundaries of responsibility of the segments. A pseudo code listing of the algorithm for the bidirectional Chord ring structure is shown in Figures 21 and 22.

In this case a node can be placed in the active state either in response to initiation of a merger or in response to receipt of a token, as in the previously described case. As in the previous case the received overlay identifier is compared with the node's own overlay identifier to see if the merger has been completed at 2101, and, if a match is found, the algorithm is finished and the completion of the merger is notified by a call to the higher levels. Then the original leaf set is saved at 2102 and is merged with the received leaf set at 2103.

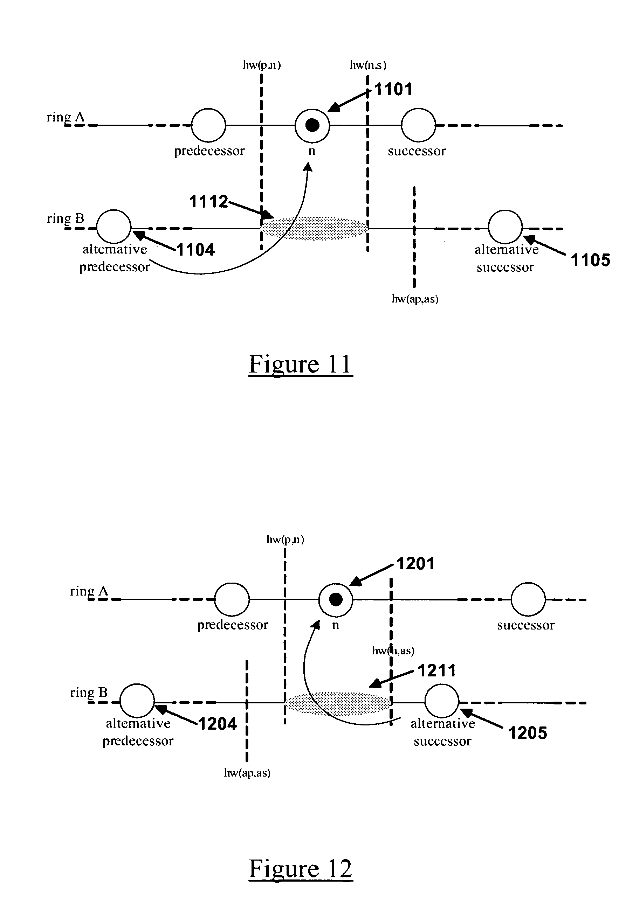

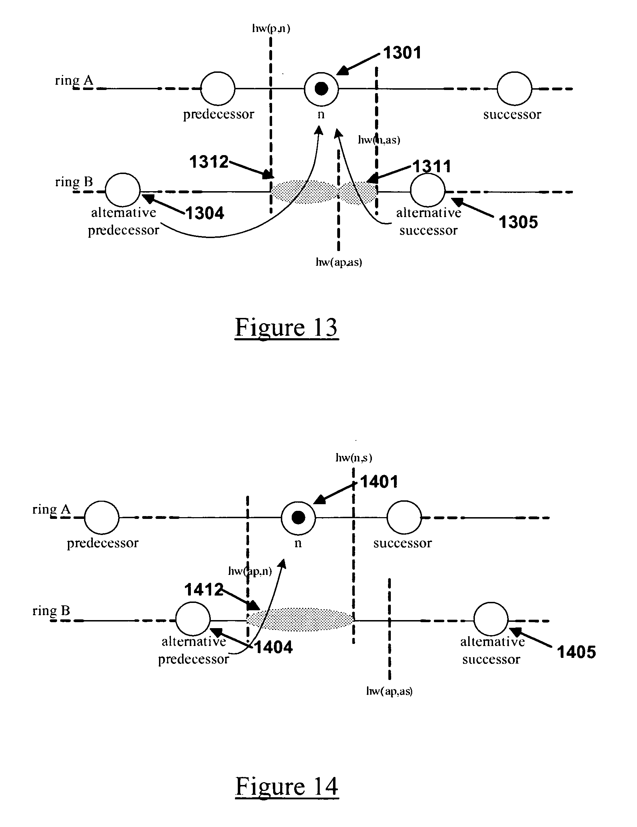

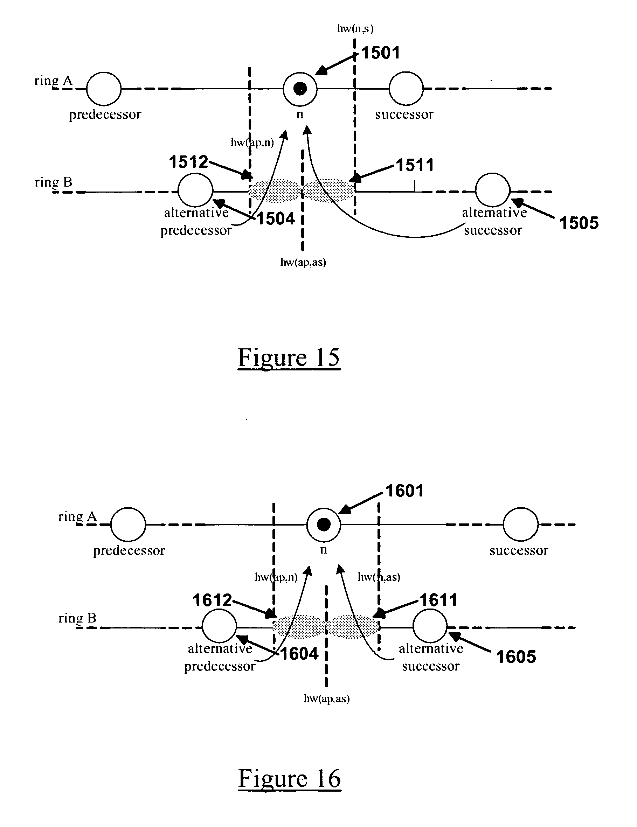

The next step is to send a data request to the alternative successor and/or the alternative predecessor. With regard to the exact decision process used, reference should be made to Figures 21 and 22 and Figures 9 to 16 for the possible scenarios, where 2111 corresponds to the case shown in Figure 9, and 2112 corresponds to the case shown in Figure 10, 2113 corresponds to the case shown in Figure 11, 2121 corresponds to the case shown in Figure 12, 2122 corresponds to the case shown in Figure 13, 2231 corresponds to the case shown in Figure 14, 2232 corresponds to the case shown in Figure 15 and 2241 corresponds to the case shown in Figure 16.

Finally a newly produced token 2204 or the received token similar to that produced for the previously described case and passed at 2205 to the next node on the ring structure in a clockwise direction.

### Protocol Messages

The following is a complete list of the protocol messages used in the preferred merger protocol, together with the data units transported by each message, and a short description of the message, wherein, in the pseudo code listings of the figures, 1 denotes the identifier, A denotes the network address and IA denotes the identifier and network address.

### START_MERGER

- Parameters:: overlayl : the new overlay identifier used by the merged ring
contactA : network address of the contact node from the other ring
- Description:: initiates the merger algorithm by higher layer modules, i.e. by the merger decision module.

### MERGER_COMPLETED

- Parameters:: none
- Description:: notifies higher layer modules about the completion of the merger algorithm. In the case of parallel mergers, multiple calls may be initiated by different nodes. In this case it is the responsibility of the higher layer modules to detect the actual completion of the merger, e.g. by counting the running instances of the merger algorithm.

### SuccessorRequest

- Parameters:: id : an identifier
- Description:: requests the recipient to find the successor in its own ring, and return its identifier and address. This is used for finding the alternative successor of the initiator node.

### SuccessorReply

- Parameters:: succIA : identifier and address of a node
- Description:: the answer to a SuccessorRequest message.

### PredecessorRequest

- Parameters:: none
- Description:: requests the recipient to return the identifier and address of its predecessor. This is used for finding the alternative predecessor of the initiator node.

### PredecessorReply

- Parameters:: predIA : identifier and address of a node
- Description:: the answer to a PredecessorRequest message.

### LeafsetRequest

- Parameters:: none
- Description:: requests the recipient to return its current leaf set. This is used for finding the leaf set of the alternative predecessor for the initiator node.

### LeafsetReply

- Parameters:: leafSet: an array of identifier and address pair of nodes
- Description:: the answer to a LeafsetRequest message.

### DataRequest

- Parameters:: from, to: an interval of the address space
- Description:: if the data parameter is set, transfers key-value pairs to the recipient. Also requests the recipient to send key-value pairs falling in the given interval back to the sender.

### DataReply

- Parameters:: data: an array of key-value pairs
- Description:: reply to the DataRequest message. Contains key-value pairs that fall in the requested interval.

### Token

- Parameters:: altSuccIA: the identifier and address of the alternative successor of the recipient
altPredIA: the identifier and address of the alternative predecessor of the recipient
altLeafset: leaf set of the alternative predecessor of the recipient newOverlayID: the overlay ID of the merged ring
- Description:: this message contains all the necessary information to be passed to the next node during zipping in order to allow it to make its local decisions of the merger algorithm

## Claims

1. A process for merging of overlay networks in a distributed data structure, each overlay network comprising a multiplicity of nodes spaced around a ring each of which has a unique identifier and a leaf set identifying its neighbouring nodes, the process comprising the following steps performed in sequence around the rings:
(a) establishing a communication link between a node in one of the rings and a node in the other ring and determining which of the nodes is to serve as an initiator node for initiating the merge process, the initiator node being preceded in its ring by its predecessor node and being followed in its ring by its successor node as identified by its leaf set;
(b) determining which of the nodes in the ring that does not include the initiator node constitutes the alternative successor of the initiator node and which of said successor node and said alternative successor node is to serve as a destination node according to which is closer to the initiator node;
(c) following step (b), causing the initiator node to make a data relocation request to the destination node, where data relocation enables a routing algorithm of the merged ring structure to find all the data in its correct place;
(d) performing data relocation from the destination node to the initiator node in response to said data relocation request, and transmitting a token from the initiator node to the destination node that includes the identifier and leaf set of the initiator node;
(e) repeating steps (b) to (d) for the destination node to determine which of the successor node and the alternative successor node of the destination node is to serve as a further destination node and to effect data relocation from the further destination node to the destination node; and
(f) repeating steps (b) to (d) for the remaining nodes until all the nodes have been merged together and the merge process is stopped by receipt of a token by the initiator node.

2. A process according to claim 1, which includes the step of determining which of the nodes in the ring that does not include the initiator node constitutes the alternative predecessor node of the initiator node.

3. A process according to claim 1 or 2, which includes the step of causing the initiator node to make a data relocation request to said alternative successor node in order to determine the leaf set of said alternative successor node,

4. A process according to claim 1, 2 or 3, wherein step (d) is carried out asynchronously between successive nodes in the merge process in that the token is passed from the initiator node to the destination node after making of the data relocation request but before the data relocation from the destination node to the initiator node in response to said data relocation request.

5. A process according to any preceding claim, which includes the step of determining whether the token received by a node has been sent from its predecessor node or its alternative predecessor node.

6. A process according to any preceding claim, which includes the step of determining whether the identifier of the token corresponds to the identifier of the node receiving the token and indicating that the merge process has been completed in the event that the identifiers match.

7. A process according to any preceding claim, which includes the step of storing the original leaf set of a node and then updating the leaf set of the node according to the leaf set of the token received by the node.

8. A process according to any preceding claim, for bidirectional merging of overlay networks, which includes the steps of determining which of the nodes in the ring that does not include the initiator node constitutes the alternative predecessor of the initiator node and which of said predecessor node and said alternative predecessor node constitutes the preceding node for transmitting a token to the initiator node according to which is closer to the initiator node.

9. A process according to claim 8, which includes the steps of causing the initiator node to make a data relocation request to said preceding node and performing data relocation from said preceding node to the initiator node in response to said data relocation request.

10. A node for use in an overlay network and adapted to enable merging of two such overlay networks in a distributed data structure, the overlay network comprising a multiplicity of nodes spaced around a ring, and each of the nodes having a unique identifier and a leaf set identifying its neighbouring nodes, and being preceded in its ring by its predecessor node and being followed in its ring by its successor node as identified by its leaf set, said node comprising:
(a) link means for establishing a communication link between said node and a node of the other overlay network;
(b) first determination means for determining which of the nodes in the other overlay network constitutes (i) the alternative predecessor node of said node and (ii) the alternative successor of said node;
(c) second determination means for determining which of said successor node and said alternative successor node is to serve as a destination node according to which is closer to said node;
(d) request means for causing said node to make a data relocation request to the destination node to initiate data relocation from the destination node to said node, where data relocation enables a routing algorithm of the merged ring structure to find all the data in its correct place;
(f) transmitting means for transmitting a token from said node to the destination node that includes the identifier and leaf set of said node; and
(h) receiving means for receiving a token from another node that includes the identifier and leaf set of said other node.

11. A node according to claim 10, further comprising means for determining which of the nodes in the ring constitutes the alternative predecessor node of said node.

12. A node according to claim 10 or 11, further comprising means for causing said node to make a data relocation request to said alternative successor node in order to determine the leaf set of said alternative successor node.

13. A node according to claim 10, 11 or 12, wherein the request means and the transmitting means operate synchronously in that the token is transmitted from said node to the destination node after making of the data relocation request but before the data relocation from the destination node to said node in response to said data relocation request.

14. A node according to any one of claims 10 to 13, further comprising means for determining whether the token received by said node has been sent from its predecessor node or its alternative predecessor node.

15. A node according to any one of claims 10 to 14, further comprising means for determining whether the identifier of the token corresponds to the identifier of said node receiving the token and indicating that the merge process has been completed in the event that the identifiers match.

## Patentansprüche

1. Prozess zur Vereinigung von Overlay-Netzen in einer verteilten Datenstruktur, wobei jedes Overlay-Netz eine Vielzahl von Knoten umfasst, die um einen Ring verteilt sind, und von welchen jeder eine eindeutige Kennung und einen Astknotensatz aufweist, der seine Nachbarknoten identifiziert, wobei der Prozess die folgenden Schritte umfasst, die der Reihe nach um die Ringe ausgeführt werden:
(a) Aufbauen einer Kommunikationsverbindung zwischen einem Knoten in einem der Ringe und einem Knoten im anderen Ring und Bestimmen, welcher der Knoten als ein Initiatorknoten zum Einleiten des Vereinigungsprozesses dienen soll, wobei dem Initiatorknoten in seinem Ring sein Vorgängerknoten vorangeht und in seinem Ring sein Nachfolgerknoten folgt, wie durch seinen Astknotensatz identifiziert;
(b) Bestimmen, welcher der Knoten im Ring, der nicht den Initiatorknoten umfasst, den alternativen Nachfolger des Initiatorknotens darstellt und welcher von dem Nachfolgerknoten und dem alternativen Nachfolgerknoten als ein Zielknoten dienen soll, je nachdem, welcher näher zum Initiatorknoten ist;
(c) Bewirken nach Schritt (b), dass der Initiatorknoten eine Datenverlagerungsanforderung an den Zielknoten stellt, wobei die Datenverlagerung einen Routing-Algorithmus der vereinigten Ringstruktur befähigt, alle Daten an ihrem korrekten Platz zu finden;
(d) Durchführen der Datenverlagerung vom Zielknoten zum Initiatorknoten als Antwort auf die Datenverlagerungsanforderung und Senden eines Tokens vom Initiatorknoten an den Zielkoten, der die Kennung und den Astknotensatz des Initiatorknotens umfasst;
(e) Wiederholen von Schritt (b) bis (d) für den Zielknoten, um zu bestimmen, welcher von dem Nachfolgerknoten und dem alternativen Nachfolgerknoten des Zielknotens als ein weiterer Zielknoten dienen und die Datenverlagerung vom weiteren Zielknoten zum Zielknoten durchführen soll; und
(f) Wiederholen von Schritt (b) bis (d) für die restlichen Knoten, bis alle Knoten miteinander vereinigt wurden und der Vereinigungsprozess durch den Empfang eines Tokens durch den Initiatorknoten gestoppt wird.

2. Prozess nach Anspruch 1, welcher den Schritt des Bestimmens umfasst, welcher von den Knoten im Ring, der nicht den Initiatorknoten umfasst, den alternativen Vorgängerknoten des Initiatorknotens darstellt.

3. Prozess nach Anspruch 1 oder 2, welcher den Schritt des Bewirkens umfasst, dass der Initiatorknoten eine Datenverlagerungsanforderung an den alternativen Nachfolgerknoten stellt, um den Astknotensatz des alternativen Nachfolgerknotens zu bestimmen.

4. Prozess nach Anspruch 1, 2 oder 3, wobei Schritt (d) asynchron zwischen aufeinander folgenden Knoten im Vereinigungsprozess ausgeführt wird, insofern als der Token nach dem Stellen der Datenverlagerungsanforderung, aber vor der Datenverlagerung vom Zielknoten zum Initiatorknoten als Antwort auf die Datenverlagerungsanforderung vom Initiatorknoten an den Zielknoten weitergegeben wird.

5. Prozess nach einem der vorhergehenden Ansprüche, welcher den Schritt des Bestimmens umfasst, ob der Token, der durch einen Knoten empfangen wird, von seinem Vorgängerknoten oder seinem alternativen Vorgängerknoten gesendet wurde.

6. Prozess nach einem der vorhergehenden Ansprüche, welcher den Schritt des Bestimmens, ob die Kennung des Tokens der Kennung des Knotens entspricht, der den Token empfängt, und Anzeigens umfasst, dass der Vereinigungsprozess abgeschlossen ist, falls die Kennungen übereinstimmen.

7. Prozess nach einem der vorhergehenden Ansprüche, welcher den Schritt des Speicherns des ursprünglichen Astknotensatzes und anschließenden Aktualisierens des Astknotensatzes des Knotens gemäß dem Astknotensatzes des durch den Knoten empfangenen Tokens umfasst.

8. Prozess nach einem der vorhergehenden Ansprüche zur bidirektionalen Vereinigung von Overlay-Netzen, welcher die Schritte des Bestimmens umfasst, welcher von den Knoten im Ring, der nicht den Initiatorknoten umfasst, den alternativen Vorgänger des Initiatorknotens darstellt und welcher von dem Vorgängerknoten und dem alternativen Vorgängerknoten den vorangehenden Knoten zum Senden eines Tokens an den Initiatorknoten darstellt, je nachdem, welcher näher zum Initiatorknoten ist.

9. Prozess nach Anspruch 8, welcher die Schritte des Bewirkens, dass der Initiatorknoten eine Datenverlagerungsanforderung an den vorangehenden Knoten stellt, und Durchführens der Datenverlagerung vom vorangehenden Knoten zum Initiatorknoten als Antwort auf die Datenverlagerungsanforderung umfasst.

10. Knoten zur Verwendung in einem Overlay-Netz und ausgelegt, um eine Vereinigung von zwei solchen Overlay-Netzen in einer verteilten Datenstruktur zu ermöglichen, wobei das Overlay-Netz eine Vielzahl von Knoten umfasst, die um einen Ring verteilt sind, und jeder der Knoten eine eindeutige Kennung und einen Astknotensatz aufweist, der seine Nachbarknoten identifiziert, und jedem der Knoten in seinem Ring sein Vorgängerknoten vorangeht und in seinem Ring sein Nachfolgerknoten folgt, wie durch seinen Astknotensatz identifiziert, wobei der Knoten umfasst:
(a) Verbindungsmittel zum Aufbauen einer Kommunikationsverbindung zwischen dem Knoten und einem Knoten des anderen Overlay-Netzes;
(b) erste Bestimmungsmittel zum Bestimmen, welcher von den Knoten im anderen Overlay-Netz (i) den alternativen Vorgängerknoten des Knotens und (ii) den alternativen Nachfolger des Knotens darstellt;
(c) zweite Bestimmungsmittel zum Bestimmen, welcher von dem Nachfolgerknoten und dem alternativen Nachfolgerknoten als ein Zielknoten dienen soll, je nachdem, welcher näher zum Knoten ist;
(d) Anforderungsmittel zum Bewirken, dass der Knoten eine Datenverlagerungsanforderung an den Zielknoten stellt, um eine Datenverlagerung vom Zielknoten zum Knoten einzuleiten, wobei die Datenverlagerung einen Routing-Algorithmus der vereinigten Ringstruktur befähigt, alle Daten an ihrem korrekten Platz zu finden;
(f) Sendemittel zum Senden eines Tokens vom Knoten an den Zielknoten, der die Kennung und den Astknotensatz des Knotens umfasst; und
(h) Empfangsmittel zum Empfangen eines Tokens von einem anderen Knoten, der die Kennung und den Astknotensatz des anderen Knotens umfasst.

11. Knoten nach Anspruch 10, ferner umfassend Mittel zum Bestimmen, welcher von den Knoten im Ring den alternativen Vorgängerknoten des Knotens darstellt.

12. Knoten nach Anspruch 10 oder 11, ferner umfassend Mittel zum Bewirken, dass der Knoten eine Datenverlagerungsanforderung an den alternativen Nachfolgerknoten stellt, um den Astknotensatz des alternativen Nachfolgerknotens zu bestimmen.

13. Knoten nach Anspruch 10, 11 oder 12, wobei die Anforderungsmittel und die Sendemittel asynchron arbeiten, insofern als der Token nach dem Stellen der Datenverlagerungsanforderung, aber vor der Datenverlagerung vom Zielknoten zum Initiatorknoten als Antwort auf die Datenverlagerungsanforderung vom Knoten an den Zielknoten weitergegeben wird.

14. Knoten nach einem der Ansprüche 10 bis 13, ferner umfassend Mittel zum Bestimmen, ob der Token, der durch den Knoten empfangen wird, von seinem Vorgängerknoten oder seinem alternativen Vorgängerknoten gesendet wurde.

15. Knoten nach einem der Ansprüche 10 bis 14, ferner umfassend Mittel zum Bestimmen, ob die Kennung des Tokens der Kennung des Knotens entspricht, der den Token empfängt, und Anzeigen, dass der Vereinigungsprozess abgeschlossen ist, falls die Kennungen übereinstimmen.

## Revendications

1. Processus de fusion de réseaux dissociés, dans une structure de données distribuée, chaque réseau dissocié comprenant une multiplicité de noeuds espacés autour d'un anneau, dont chacun a un identifiant unique et un ensemble de feuilles identifiant ses noeuds voisins, le processus comprenant les étapes suivantes effectuées en séquence autour des anneaux :
(a) établir une liaison de communication entre un noeud dans un des anneaux et un noeud dans l'autre anneau et déterminer lequel des noeuds doit servir de noeuds amorceur pour amorcer le processus de fusion, le noeud amorceur étant précédé dans son anneau par son noeud prédécesseur et étant suivi dans son anneau par son noeud successeur comme identifié par son ensemble de feuilles ;
(b) déterminer lequel des noeuds dans l'anneau qui n'inclut pas le noeud amorceur constitue le successeur de remplacement du noeud amorceur et lequel dudit noeud successeur et dudit noeud successeur de remplacement doit servir de noeud de destination selon lequel est plus proche du noeud amorceur ;
(c) suivant l'étape (b), amener le noeud amorceur à effectuer une demande de relocalisation de données vers le noeud de destination, où une relocalisation de données permet à un algorithme de routage de la structure en anneau fusionnée de trouver toutes les données à leur emplacement correct ;
(d) effectuer une relocalisation de données du noeud de destination au noeud amorceur en réponse à ladite demande de relocalisation de données, et transmettre un jeton du noeud amorceur au noeud de destination qui inclut l'identifiant et l'ensemble de feuilles du noeud amorceur ;
(e) répéter les étapes (b) à (d) pour que le noeud de destination détermine lequel du noeud successeur et du noeud successeur de remplacement du noeud de destination doit servir de noeud de destination supplémentaire et effectuer la relocalisation de données depuis le noeud de destination supplémentaire vers le noeud de destination ; et
(f) répéter les étapes (b) à (d) pour les noeuds restants jusqu'à ce que tous les noeuds aient été fusionnés ensemble et le processus de fusion est arrêté par la réception d'un jeton par le noeud amorceur.

2. Processus selon la revendication 1, qui inclut l'étape consistant à déterminer lequel des noeuds dans l'anneau qui n'inclut pas le noeud amorceur constitue le noeud prédécesseur de remplacement du noeud amorceur.

3. Processus selon les revendications 1 ou 2, qui inclut l'étape consistant à amener le noeud amorceur à effectuer une demande de relocalisation de données vers ledit noeud successeur de remplacement de manière à déterminer l'ensemble de feuilles dudit noeud successeur de remplacement.

4. Processus selon les revendications 1,2 ou 3, dans lequel l'étape (d) est exécutée de manière asynchrone entre des noeuds successifs dans le processus de fusion en ce que le jeton est passé du noeud amorceur au noeud de destination après avoir effectué la demande de relocalisation de données mais avant la relocalisation de données du noeud de destination au noeud amorceur en réponse à ladite demande de relocalisation de données.

5. Processus selon une quelconque des revendications précédentes, qui inclut l'étape consistant à déterminer si le jeton reçu par un noeud a été envoyé depuis son noeud prédécesseur ou son noeud prédécesseur de remplacement.

6. Processus selon une quelconque des revendications précédentes, qui inclut l'étape consistant à déterminer si l'identifiant du jeton correspondant à l'identifiant du noeud recevant le jeton et indiquer que le processus de fusion a été parachevé au cas où les identifiants concordent.

7. Processus selon une quelconque des revendications précédentes, qui inclut l'étape consistant à mémoriser l'ensemble de feuilles d'origine et ensuite mettre à jour l'ensemble de feuilles du noeud selon l'ensemble de feuilles du jeton reçu par le noeud.

8. Processus selon une quelconque des revendications précédentes, pour la fusion bidirectionnelle de réseaux dissociés, qui inclut les étapes consistant à déterminer lequel des noeuds dans l'anneau qui n'inclut pas le noeud amorceur constitue le prédécesseur de remplacement du noeud amorceur et lequel dudit noeud prédécesseur et dudit noeud prédécesseur de remplacement constitue le noeud précédent pour transmettre un jeton vers le noeud amorceur selon lequel est plus proche du noeud amorceur.

9. Processus selon la revendication 8, qui inclut les étapes consistant à amener le noeud amorceur à effectuer une demande de relocalisation de données vers ledit noeud précédent et effectuer une relocalisation de données depuis ledit noeud précédent vers le noeud amorceur en réponse à ladite demande de relocalisation de données.

10. Noeud à utiliser dans un réseau dissocié et adapté afin de permettre une fusion de deux réseaux dissociés dans une structure de données distribuée, le réseau dissocié comprenant une multiplicité de noeuds espacés autour d'un anneau, et chacun des noeuds ayant un identifiant unique et un ensemble de feuilles identifiant ses noeuds voisins, et étant précédé dans son anneau par son noeud prédécesseur et étant suivi dans son anneau par son noeud successeur comme identifié par son ensemble de feuilles, ledit noeud comprenant :
(a) un moyen de liaison pour établir une liaison de communication entre ledit noeud et un noeud de l'autre réseau dissocié ;
(b) un premier moyen de détermination pour déterminer lequel des noeuds dans l'autre réseau dissocié constitue (i) le noeud prédécesseur de remplacement dudit noeud et (ii) le successeur de remplacement dudit noeud ;
(c) un second moyen de détermination pour déterminer lequel dudit noeud successeur et dudit noeud successeur de remplacement doit servir de noeud de destination selon lequel est plus proche dudit noeud ;
(d) un moyen de demande pour amener ledit noeud à effectuer une demande de relocalisation de données vers le noeud de destination pour amorcer une relocalisation de données depuis le noeud de destination vers ledit noeud, où une relocalisation de données permet à un algorithme de routage de la structure en anneau fusionnée de trouver toutes les données à leur emplacement correct ;
(f) un moyen de transmission pour transmettre un jeton dudit noeud vers le noeud de destination qui inclut l'identifiant et l'ensemble de feuilles dudit noeud ; et
(h) un moyen de réception pour recevoir un jeton provenant d'un autre noeud qui inclut l'identifiant et l'ensemble de feuilles dudit autre noeud.

11. Noeud selon la revendication 10, comprenant en outre un moyen pour déterminer lequel des noeuds dans l'anneau constitue le noeud prédécesseur de remplacement dudit noeud.

12. Noeud selon les revendications 10 ou 11, comprenant en outre un moyen pour amener ledit noeud à effectuer une demande de relocalisation de données vers ledit noeud successeur de remplacement de manière à déterminer l'ensemble de feuilles dudit noeud successeur de remplacement.

13. Noeud selon les revendications 10,11 ou 12, dans lequel le moyen de demande et le moyen de transmission fonctionnent de manière asynchrone en ce que le jeton est transmis dudit noeud au noeud de destination après avoir effectué la demande de relocalisations de données mais avant la relocalisation de données du noeud de destination audit noeud en réponse à ladite demande de relocalisations de données.

14. Noeud selon une quelconque des revendications 10 à 13, comprenant en outre un moyen pour déterminer si le jeton reçu par ledit noeud a été envoyé depuis son noeud prédécesseur ou son noeud prédécesseur de remplacement.

15. Noeud selon une quelconque des revendications 10 à 14, comprenant en outre un moyen pour déterminer si l'identifiant du jeton correspond à l'identifiant dudit noeud recevant le jeton et indiquant que le processus de fusion a été parachevé au cas où les identifiants concordent.
